# EUROPÄISCHE PATENTSCHRIFT

(11) **EP 3 988 778 B1**
(45) Veröffentlichungstag und Bekanntmachung des Hinweises auf die Patenterteilung: **17.07.2024**
(21) Anmeldenummer: 21203153.8
(22) Anmeldetag: 18.10.2021
(51) Int. Cl.: F02F 3/02, F16J 9/22

(54) **KOLBEN FÜR EINE BRENNKRAFTMASCHINE UND HERSTELLUNGSVERFAHREN**
PISTON FOR A COMBUSTION ENGINE AND MANUFACTURING METHOD
PISTON POUR UN MOTEUR À COMBUSTION INTERNE ET PROCÉDÉ DE FABRICATION

(30) Priorität: 20.10.2020 DE 102020213242
(43) Veröffentlichungstag der Anmeldung: 27.04.2022
(73) Patentinhaber: MAHLE International GmbH, 70376 Stuttgart (DE)
(72) Erfinder: BECHTOLD, Peter, 78628 Rottweil (DE); BISWURM, Michael, 78628 Rottweil (DE)
(74) Vertreter: BRP Renaud & Partner mbB Rechtsanwälte Patentanwälte Steuerberater

(56) Entgegenhaltungen:
- EP-A1- 3 284 558
- CH-A- 310 940
- DE-A1- 1 751 013
- DE-A1- 102012 006 834
- JP-A- H0 882 243
- US-A- 3 463 057

## Beschreibung

Die vorliegende Erfindung betrifft einen Kolben für eine Brennkraftmaschine, der einen axial stirnseitigen Kolbenboden sowie eine radial äußerste Kolbenaußenfläche aufweist, welche in Umfangsrichtung elliptisch verläuft. Die Erfindung betrifft des Weiteren ein Verfahren zur Herstellung eines solchen Kolbens.

Kolben für Brennkraftmaschinen sind aus dem Stand der Technik hinlänglich bekannt. Sie führen im Betrieb einer Brennkraftmaschine eine Hubbewegung aus, um die bei der Verbrennung in einem Brennraum erzeugte Energie, üblicherweise über eine Kurbelwelle, einem Antrieb, beispielsweise in einem Kraftfahrzeug, bereitzustellen. Solche Kolben sind in einem zugehörigen Zylinder aufgenommen, wobei der Kolben mit einem in einer Axialrichtung stirnseitigen Kolbenboden den Brennraum begrenzt.

Um im Betrieb bei der Hubverstellung des Kolbens eine Abdichtung zwischen dem Kolben und dem Zylinder zu erreichen, ist es bekannt, zumindest einen Kolbenring einzusetzen. Zu diesem Zweck weist der Kolben für den jeweiligen Kolbenring eine radial nach außen offene Ringnut auf, in welcher der Kolbenring aufgenommen ist.

Um der im Betrieb auftretenden Belastung des Kolbenrings und somit der Ringnut gerecht zu werden, weisen derartige Kolben häufig, insbesondere bei der axial dem Kolbenboden nächstbenachbarten Ringnut, einen Ringträger als eine Verstärkung auf, wobei der Ringträger gewöhnlich eine größere Härte aufweist, als ein Grundkörper des Kolbens, der nachfolgend auch als Kolbenkörper bezeichnet wird. Bekannt sind hierbei Kolbenkörper aus Leichtmetall.

Derartige Kolben werden gewöhnlich durch ein Gussverfahren hergestellt. Bekannt ist es auch, solche Kolben zu schmieden. Bei der Herstellung der Kolben ist es üblich, zunächst eine äußerste, dem Zylinder nächstbenachbarte Außenfläche des Kolbens durch Bearbeiten eines Rohlings herzustellen, bevor die Ringnut eingebracht, insbesondere eingestochen wird. Beim Erzeugen der Ringnut kommt es dabei in der Regel zur Bildung von Graten. Derartige Grate führen im Betrieb des Kolbens zu einer erhöhten Abnutzung und erhöhten mechanischen Belastung. Bekannt ist es daher, solche Grate durch das Einbringen von Fasen an entsprechenden Kanten der Ringnut zu entfernen. Alternativ oder zusätzlich ist es bekannt, den Bereich der Ringnut radial nach innen zu versetzen. Das radiale Versetzen erfolgt hierbei in einem die Ringnut umfassenden Ringabschnitt, der zum Kolbenboden axial beabstandet ist und sich in Umfangsrichtung üblicherweise geschlossen erstreckt. Der Ringabschnitt überragt hierbei den Ringträger axial beidseitig, sodass durch das radiale Versetzen des Ringabschnitts nach innen ein Kontakt des härteren Ringträgers mit der Zylinderwand verhindert ist.

Das Versehen des Kolbens mit dem Ringabschnitt sowie das Einbringen der Ringnut erfordern hierbei jeweils separate Herstellungsschritte, die in der Regel nach dem Bearbeiten des Rohlings zur Herstellung der Kolbenaußenfläche erfolgen.

Üblicherweise werden die gegossenen oder geschmiedeten Rohlinge zunächst gedreht, um in einer Vorform die Kolbenaußenfläche zu erzeugen. In die Kolbenaußenfläche der Vorform wird anschließend, wiederum durch eine drehende Bearbeitung, eine radiale Vertiefung zum Herstellen des Ringabschnitts eingearbeitet. Anschließend wird die Ringnut eingebracht und gegebenenfalls angefast und somit entgratet. Somit ist die Herstellung eines Kolbens an sich mit mehreren Herstellungsschritten verbunden.

Um den unterschiedlichen Belastungen des Kolben während der Hubbewegungen, insbesondere die sogenannte Druckseite und Gegendruckseite des Kolbens, zu berücksichtigen, ist es bekannt, die Kolbenaußenfläche in Umfangsrichtung unrund, insbesondere elliptisch herzustellen. Die Kolbenaußenfläche weist also in Umfangsrichtung keinen rotationssymmetrischen Verlauf auf. Dies erfordert bei der Herstellung des Kolbens einen zusätzlichen Aufwand. Beispielsweise ist es zur Herstellung der elliptischen Kolbenaußenfläche notwendig, bei der drehenden Bearbeitung des Rohlings einer Drehbewegung Schwingungen zu überlagern, welche die Herstellung des Kolbens entsprechend komplizieren. Zudem erfordern derartige Bearbeitungen das Bereitstellen von entsprechenden, unterschiedlichen Werkzeugen.

Kolben der vorstehend beschriebenen Art sowie deren Herstellungsverfahren sind beispielsweise aus der DE 2 005 663 A1, der DD 124930 und der DE 26 20 716 C3 bekannt. Zudem sind derartige Kolben und deren Herstellungsverfahren im Buch " Kolben und motorische Erprobung", der MAHLE GmbH aus dem Jahr 2011 sowie im "Kolbenhandbuch" von Nüral beschrieben und gezeigt. Weitere Kolben sind aus DE 10 2012 006834 A1 oder US 3 463 057 A bekannt.

Die vorliegende Erfindung beschäftigt sich mit der Aufgabe, für einen Kolben für eine Brennkraftmaschine sowie für ein Herstellungsverfahren eines solchen Kolbens verbesserte oder zumindest andere Ausführungsformen anzugeben, die sich insbesondere durch eine vereinfachte und kostengünstige Herstellung auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine in einer Umfangsrichtung im Übrigen elliptische Außenfläche eines Kolben im Bereich einer Ringnut zur Aufnahme eines Kolbenrings in Umfangsrichtung rotationssymmetrisch, das heißt rund, auszubilden. Somit kann das komplexe Herstellen und Ausbilden der Ringnut im Vergleich zur übrigen elliptischen Außenfläche vereinfacht und kostengünstig erfolgen. Insbesondere können somit Bearbeitungsschritte zum Ausbilden des den Ringnut umfassenden Bereichs, nachfolgend auch als Ringabschnitt bezeichnet, vereinfacht, insbesondere vereinfacht drehend, erfolgen. Dies führt neben der vereinfachten Herstellung auch zu einer Erhöhung der Taktzahlen zur Herstellung derartiger Kolben und folglich auch zu reduzierten Herstellungskosten.

Dem Erfindungsgedanken entsprechend weist der Kolben einen in einer Axialrichtung stirnseitigen Kolbenboden auf. Ein Grundkörper des Kolbens, der nachfolgend auch als Kolbenkörper bezeichnet wird, weist eine radial äußerste Außenfläche des Kolbens auf, welche nachfolgend auch als Kolbenaußenfläche bezeichnet wird. Die Kolbenaußenfläche erstreckt sich axial und in Umfangsrichtung. Der Kolben weist ferner den Ringabschnitt auf, der axial zum Kolbenboden beabstandet ist und sich axial und in Umgangsrichtung, vorzugsweise geschlossen, erstreckt. Der Ringabschnitt weist dabei einen Ringträger mit der Ringnut zur Aufnahme eines Kolbenrings auf. Im Ringabschnitt geht die Kolbenaußenfläche in eine Außenfläche des Ringabschnitts über, die nachfolgend auch als Ringabschnitt-Außenfläche bezeichnet wird. Der Ringabschnitt weist somit die radial äußere und in Umfangsrichtung verlaufende Ringabschnitt-Außenfläche auf. Hierbei ist die Ringabschnitt-Außenfläche relativ zur Kolbenaußenfläche radial nach innen versetzt. Erfindungsgemäß ist die Kolbenaußenfläche in Umfangsrichtung elliptisch ausgebildet, verläuft somit elliptisch, wohingegen die Ringabschnitt-Außenfläche in Umfangsrichtung rotationssymmetrisch ausgebildet ist und somit rotationssymmetrisch verläuft.

Der elliptische Verlauf der Kolbenaußenfläche und der rotationssymmetrische Verlauf der Ringabschnitt-Außenfläche haben zur Folge, dass in der im Übrigen elliptisch bzw. oval ausgebildeten, radialen Gesamtaußenfläche die rotationssymmetrische und somit runde Ringabschnitt-Außenfläche ausgebildet ist. Mit anderen Worten, durch den rotationssymmetrischen Verlauf hat die Ringabschnitt-Außenfläche einen Außenradius, nachfolgend auch als Ringabschnitt-Radius bezeichnet, der in Umfangsrichtung konstant ist. Demgegenüber variiert der Außendurchmesser der Kontaktaußenfläche entlang der Umfangsrichtung.

Bevorzugt verläuft die Kolbenaußenfläche in Umgangsrichtung oval. Somit weist die Kontaktaußenfläche einen kleinen Außendurchmesser und einen großen Außendurchmesser auf, die in Umgangsrichtung, verdreht, in der Regel um 90° verdreht, sind, also radial und in der Regel quer zueinander verlaufen.

Bevorzugt und zweckmäßig ist der doppelte Ringabschnitt-Radius und somit der Ringabschnitt-Außendurchmesser stets kleiner als die Außendurchmesser der Kolbenaußenfläche. Mit anderen Worten die Ringabschnitt-Außenfläche ist bevorzugt und zweckmäßig über den gesamten Umfang gegenüber der Kolbenaußenfläche radial nach innen versetzt.

Die vorliegend angegebenen Richtungen beziehen sich auf die Axialrichtung, an der stirnseitig der Kolbenboden angeordnet ist. Bevorzugt entspricht die Axialrichtung der Hubrichtung des Kolbens in einem zugehörigen Zylinder bzw. der Längsmittelachse des Kolbens. Folglich entspricht in Umfangsrichtung, wie bekannt, um die Axialrichtung verlaufen. Die Radialrichtung bzw. "radial" verlaufen dabei, wie bekannt, quer zur Axialrichtung.

Prinzipiell kann der Ringabschnitt beliebig am Kolben angeordnet sein, sofern der Ringabschnitt axial zum Kolbenboden beabstandet ist.

Bevorzugt umfasst der Ringabschnitt die in Axialrichtung dem Kolbenboden nächste Ringnut, also die oberste Ringnut. Das heißt, dass der Kolben im Bereich der obersten Ringnut rotationssymmetrisch und im Übrigen elliptisch ausgebildet ist.

Der Kolben kann prinzipiell zwei oder mehr Ringnute aufweisen, welche Bestandteil eines dem Fachmann als Ringpartie bekannten Abschnitts des Kolbens sein können. Mit anderen Worten, der Ringabschnitt bildet die Ringpartie, sofern der Kolben eine einzelne Ringnut aufweist, oder ist Bestandteil der Ringpartie, sofern der Kolben zwei oder mehr Ringnute aufweist.

Der Ringträger ist vorteilhaft im Ringabschnitt im Kolbenkörper aufgenommen und ist bevorzugt axial beidseitig zur Kolbenaußenfläche beabstandet. Dabei ist der Ringträger als Bestandteil des Ringabschnitts radial zur Kolbenaußenfläche nach innen versetzt angeordnet.

Der Ringträger dient vorzugsweise der mechanischen Stabilisierung des Ringabschnitts, insbesondere der Ringnut. Die Stabilisierung führt zu einer erhöhten Langlebigkeit in dem im Betrieb hochbeanspruchten Ringabschnitt. Zudem erlaubt der Ringträger den Kolben im Übrigen, insbesondere den Kolbenkörper, kostengünstiger und/oder gewichtsreduziert auszubilden.

Bevorzugt ist es dementsprechend, wenn der Kolbenkörper aus einem Leichtmetall hergestellt ist, wohingegen der Ringträger aus einem Werkstoff herstellt ist, der eine größere Härte und/oder eine größere Beständigkeit aufweist, als der Kolbenkörper. Insbesondere ist der Ringträger aus einem Eisenwerkstoff.

Bei vorteilhaften Ausführungsformen bildet der Ringträger die Ringabschnitt-Außenfläche teilweise. Das heißt, dass eine radiale Außenfläche des Ringträgers, nachfolgend auch Ringträger-Außenfläche genannt, Bestandteil der Ringabschnitt-Außenfläche ist. Die Ringträger-Außenfläche ist dabei axial beidseitig zur Kolbenaußenfläche beabstandet. Das heißt insbesondere, dass axial beidseitig der Ringträger-Außenfläche eine Außenfläche des Kolbenkörpers als Bestandteil der Ringabschnitt-Außenfläche zwischen der rotationsymmetrischen Ringträger-Außenfläche und der elliptischen Kolbenaußenfläche angeordnet ist. Somit wird der Ringabschnitt teilweise vom Ringträger und teilweise vom Kolbenkörper gebildet. Bevorzugt ist es hierbei, wenn der Ringträger axial mittig im Ringabschnitt angeordnet ist.

Als bevorzugt gelten Ausführungsformen, bei denen eine radiale Tiefe der Ringnut, also die radiale Erstreckung von einem radial inneren Grund der Ringnut bis zur Ringabschnitt-Außenfläche in Umgangsrichtung konstant ist. Das heißt insbesondere, dass die Erstreckung, nachfolgend auch als Aufnahmetiefe der Ringnut bezeichnet, und die Ringabschnitt-Außenfläche jeweils in Umfangsrichtung rotationssymmetrisch und folglich rund ausgebildet sind. Somit ist die Herstellung des Kolbens weiter vereinfacht.

Als bevorzugt gelten Ausführungsformen, bei denen ein radialer Abstand zwischen dem radial inneren Grund der Ringnut und der Kolbenaußenfläche, nachfolgend auch als Ringnuttiefe bezeichnet, in Umfangsrichtung variiert. Besonders bevorzugt ist die Ringnut dabei in Umfangsrichtung rotationssymmetrisch, also rund bzw. unelliptisch. Dies führt zu einer weiter vereinfachten Herstellung des Kolbens.

Die Variation der Ringnuttiefe in Umfangsrichtung verläuft analog zur lokalen Differenz der Ringnuttiefe zur Kolbenaußenfläche. Insbesondere verläuft die Ringnuttiefe dabei in Umfangsrichtung periodisch.

Prinzipiell ist die radial nach innen versetzte Anordnung der Ringabschnitt-Außenfläche ausreichend, um einen Kontakt von möglicherweise an der Ringnut vorhandenen Graten mit einem zugehörigen Zylinder zu vermeiden.

Vorstellbar ist es auch, die Ringnut und somit den Ringträger im Bereich der Ringnut zu Entgraten, um die Gefahr des Kontakts mit dem zugehörigen Zylinder und folglich entsprechende Beschädigungen und/oder Abnutzungen zu vermeiden oder zumindest weiter zu reduzieren.

Das Entgraten erfolgt dabei vorteilhaft durch das Vorsehen von Fasen. Die Ringnut ist also radial außen von zwei axial gegenüberliegenden Kanten begrenzt. Dabei weist zumindest eine der Kanten, vorteilhaft die jeweilige Kante, eine Fase auf.

Dabei ist eine axiale Höhe der jeweiligen Fase in Umfangsrichtung vorzugsweise konstant. Dies ist insbesondere die Folge einer rotationssymmetrischen Bearbeitung des Kolbens zum Einbringen der Fasen. Folglich ist die Herstellung des Kolbens auf diese Weise weiter vereinfacht.

Durch den elliptischen Verlauf der Kolbenaußenfläche und den rotationssymmetrischen Verlauf der Ringabschnitt-Außenfläche in Umfangsrichtung, variiert der radiale Abstand zwischen der Ringabschnitt-Außenfläche und der Kolbenaußenfläche in Umfangsrichtung. Dieser radiale Abstand wird nachfolgend auch als Versatz bezeichnet.

Bevorzugt beträgt der Versatz zum kleinen Außendurchmesser zumindest 0,01 mm, besonders bevorzugt zwischen 0,01 mm und 0,1 mm, insbesondere zwischen 0,02 mm und 0,1 mm Das heißt insbesondere, dass der Versatz über den gesamten Umfang zumindest zwischen zumindest 0,01 mm und 0,1 mm, insbesondere zwischen 0,02 mm und 0,1 mm, beträgt. Somit wird der Kontakt des Ringträgers mit dem zugehörigen Kolben bei einfacher Herstellung effektiv vermieden oder zumindest reduziert. Zugleich führt dies dazu, dass ein in der Ringnut aufgenommener Kolbenring im Betrieb einen ausreichenden Kontakt mit dem zugehörigen Zylinder aufweist und/oder eine möglicherweise in Umfangsrichtung variierende Aufnahme des Kolbenrings in der Ringnut ausreichend ausgeglichen ist. Folglich führen diese Verhältnisse jeweils trotz der im Gegensatz zur Kolbenaußenfläche rotationssymmetrischen Ausbildung der Ringabschnitt-Außenfläche, vorzugsweise des gesamten Ringabschnitts, zu einer ausreichend hohen und zuverlässigen Funktionalität des Kolbens bei zugleich vereinfachten Herstellung und reduzierten Herstellungskosten.

Es versteht sich, dass neben dem Kolben auch das Verfahren zum Herstellen des Kolbens zum Umfang dieser Erfindung gehört.

Zum Herstellen des Kolbens wird zunächst ein Rohling bereitgestellt. Der Rohling hat vorteilhaft eine im Wesentlichen zylindrische Form und ist vorteilhaft gegossen. Denkbar ist es auch, den Rohling zu schmieden.

Das Ausarbeiten der der Ringabschnitt-Außenfläche und der Kolbenaußenfläche erfolgen bevorzugt jeweils drehend. Der Rohling wird rotationssymmetrisch bearbeitet, um in den Rohling im den Ringträger aufweisenden Ringabschnitt eine radiale und in Umfangsrichtung rotationssymmetrisch verlaufende Vertiefung einzubringen,. Die nach innen versetzte Vertiefung umfasst bevorzugt die Ringabschnitt-Außenfläche des späteren Kolbens. Somit ist eine Vorform des Kolbens hergestellt. Eine Außenfläche der Vorform wird zum Herstellen des Kolbens so bearbeitet, dass die Außenfläche außerhalb des Ringabschnitts in Umfangsrichtung elliptisch verläuft und somit eine elliptische Form aufweist. Vorteilhaft entspricht die elliptische Außenfläche der späteren elliptischen Form der Kolbenaußenfläche des Kolbens.

Die Ringnut wird vorzugsweise in die Vorform eingebracht.. Durch die Ringnut ist in der Vorform zugleich die Ringabschnitt-Außenfläche definiert.

Das Einbringen der Ringnut erfolgt vorzugsweise durch das Stechen der Ringnut in die Vertiefung, insbesondere in den Ringträger. Hierzu kommt zweckmäßig ein Stechwerkzeug zum Einsatz, das nachfolgend auch als Nutmesser bezeichnet wird. Das Einbringen der Ringnut erfolgt, wie vorstehend erwähnt, durch das Stechen des Nutmessers in den Ringträger und ein rotationssymmetrisches Drehen zwischen dem Nutmesser und der Vorform.

Wahlweise können die Kanten der Ringnut angefast werden, um an der jeweiligen Kante eine Fase auszubilden. Vorteilhaft erfolgt das Anfasen durch eine rotationssymmetrische Drehung der Vorform relativ zu einem Werkzeug, wobei dieses Werkzeug nachfolgend auch als Anfasmesser bezeichnet wird.

Vorteilhaft werden an der der Ringnut radial außen und axial beidseitig Fasen eingebracht. Hierzu kommt bevorzugt dasselbe Anfasmesser zugleich zum Einsatz. Das heißt, dass mit demselben Anfasmesser zugleich an beiden Kanten jeweils eine Fase eingebracht wird.

Durch die erfindungsgemäße Herstellung des Kolbens ist die Bildung von Graten und/oder Auswürfen an den Kantender Ringnut verhindert oder zumindest reduziert. Folglich sind entsprechende Bearbeitungsschritte zum Beseitigen solcher Grate und/oder Auswürfe nicht notwendig. Daraus resultiert eine weitere Vereinfachung und Kostenreduzierung bei der Herstellung des Kolbens. Zudem werden durch solche Grate und/oder Auswürfe bedingte Schäden und Verschleiße verhindert oder zumindest reduziert.

Besonders bevorzugt sind das Nutmesser und das Anfasmesser in einem Kombinationswerkzeug, das vorteilhaft als ein Formwerkzeug ausgebildet ist, zusammengefasst. Zum Einbringen der Ringnut und der Fasen wird also ein Kombinationswerkzeug, insbesondere als Formwerkzeug, bereitgestellt. Das Kombinationswerkzeug umfasst das Nutmesser und das Anfasmesser, wobei das Anfasmesser dem Nutmesser folgend angeordnet ist. Anfasmesser und Nutmesser sind dabei miteinander verbunden, sodass sie zum Herstellen der Ringnut und der zumindest einen Fase gemeinsam bewegt werden können. Hierbei steht das Nutmesser hin zum Ringträger weiter ab als das Anfasmesser. Das heißt, dass das Nutmesser eine radiale Nutmesser-Vorderseite aufweist, welche eine radiale Anfas-Vorderseite des Anfasmessers überragt. Zum Herstellen der Ringnut und der zumindest einen Fase wird das Kombinationswerkzeug radial außen der Vorform angeordnet, so dass beide Vorderseiten der Außenfläche zugewandt sind. Zudem wird zwischen der Vorform und dem Kombinationswerkzeug eine rotationssymmetrische relative Drehbewegung durchgeführt. Insbesondere wird die Vorform rotationssymmetrisch gedreht. Während der Drehbewegung wird das Kombinationswerkzeug relativ zur Vorform radial hin zur Vorform bewegt, so dass bei der Drehbewegung zunächst das Nutmesser und anschließend das Anfasmesser in die Vorform eindringen. In der Folge bringt das Nutmesser die Ringnut und das Anfasmesser die zumindest eine Fase ein.

Der Rohling ist, wie vorstehend beschrieben, bevorzugt durch ein Gussformverfahren hergestellt. Bevorzugt ist es dabei, wenn der Ringträger in die zugehörige Gussform eingelegt wird, so dass der Ringträger beim späteren Kolben im Ringabschnitt angeordnet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Figur 1: eine isometrische Ansicht eines Kolbens,
- Figur 2: eine Draufsicht auf den Kolben,
- Figur 3: einen Schnitt durch den Kolben im Bereich einer Ringnut,
- Figur 4: einen Schnitt durch den Kolben im Bereich der Ringnut bei einem anderen Ausführungsbeispiel,
- Figur 5: eine Draufsicht auf einen Rohling und auf eine Vorform bei der Herstellung des Kolbens,
- Figur 6: einen Schnitt durch die Vorform mit einem Kombinationswerkzeug zum Herstellen des Kolbens.

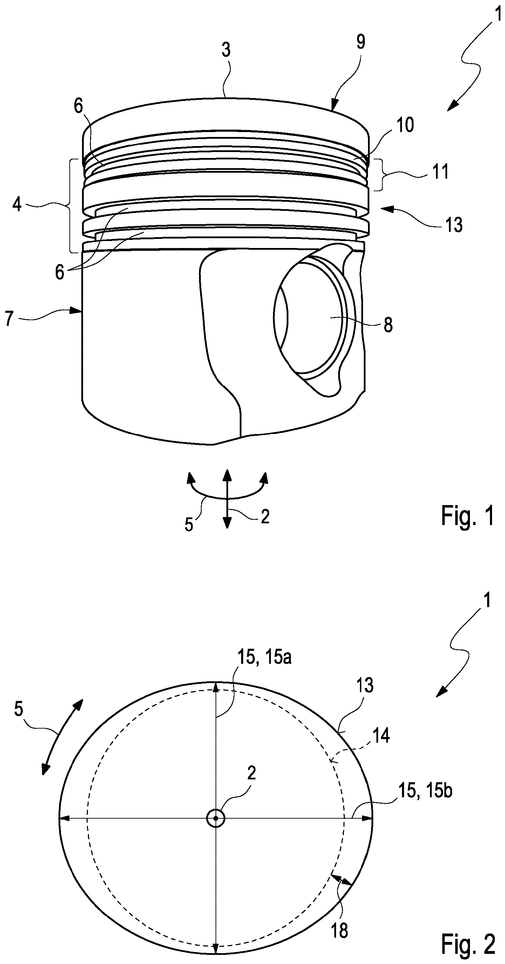

Ein erfindungsgemäßer Kolben 1 für eine im Übrigen nicht gezeigte Brennkraftmaschine, wie er beispielsweise in den Figuren 1 bis 4 gezeigt ist, weist in einer Axialrichtung 2 stirnseitig einen Kolbenboden 3 auf. Axial dem Kolbenboden 3 benachbart weist der Kolben 1 eine Ringpartie 4 auf, die sich in Axialrichtung 2 und in einer Umfangsrichtung 5, in den gezeigten Ausführungsbeispielen geschlossen, erstreckt. Die Ringpartie 4 weist zumindest eine Ringnut 6 auf, wobei die Ringpartie 4 in den gezeigten Ausführungsbeispielen rein beispielhaft drei Ringnute 6 aufweist. Die jeweilige Ringnut 6 dient der Aufnahme eines nicht gezeigten Kolbenrings. Auf der axial von der Ringpartie 4 abgewandten Seite schließt ein Kolbenhemd 7 an, der, wie lediglich Figur 1 entnommen werden kann, radial von zumindest einer Bolzenbohrung 8 unterbrochen ist. In den gezeigten Ausführungsbeispielen sind zwei radial gegenüberliegende Bolzenbohrungen 8 vorgesehen, von denen in Figur 1 lediglich eine sichtbar ist. Der Kolben 1 weist hierbei einen Grundkörper 9 auf, der nachfolgend auch als Kolbenkörper 9 bezeichnet ist. Der Kolbenkörper 9 umfasst in den gezeigten Ausführungsbeispielen den Kolbenboden 3, die Ringpartie 4 sowie das Kolbenhemd 7. Die axial dem Kolbenboden 3 nächstbenachbarte Ringnut 6 ist ferner in einem Ringträger 10 ausgebildet. Der Kolbenkörper 9 ist aus einem Leichtmetall. Der Ringträger 10 ist aus einem Werkstoff mit einer gegenüber dem Leichtmetall größeren Härte und/oder Beständigkeit. In den gezeigten Ausführungsbeispielen ist der Ringträger 10 aus einem Eisenwerkstoff.

Der Kolben 1 weist in der Ringpartie 4 im Bereich der dem Kolbenboden 3 nächstbenachbarten Ringnut 6, also der axial obersten Ringnut 6, einen Ringabschnitt 11 auf, welcher die Ringnut 6 sowie den Ringträger 10 umfasst. Der Ringabschnitt 11 umfasst ferner axial beidseitig des Ringträgers 10 jeweils einen Abschnitt 12 des Kolbenkörpers 9, sodass der Ringträger 10 axial mittig im Ringabschnitt 11 angeordnet ist. Diese Abschnitte 12 werden nachfolgend auch jeweils als Kolbenkörperabschnitt 12 bezeichnet.

Wie den Figuren 1 bis 4 zu entnehmen ist, weist der Kolben 1 eine radial äußerste Außenfläche 13 auf, welche nachfolgend auch als Kolbenaußenfläche 13 bezeichnet wird. Die Kolbenaußenfläche 13 erstreckt sich hierbei axial und in Umfangsrichtung 5. Dabei ist die Kolbenaußenfläche 13 am Kolbenhemd 7 im Bereich der Bolzenbohrungen 8 in Umfangsrichtung unterbrochen und im Übrigen in Umfangsrichtung 5 geschlossen. Unterbrochen wird die Kolbenaußenfläche 13 in Axialrichtung 2 ferner von den Ringnuten 6 und dem Ringabschnitt 11. Der Ringabschnitt 11 weist eine Außenfläche 14 auf, die nachfolgend auch als Ringabschnitt-Außenfläche 14 bezeichnet wird. Die Ringabschnitt-Außenfläche 14 ist hierbei gegenüber der Kolbenaußenfläche 13 radial nach innen versetzt. Figur 2 zeigt eine Draufsicht auf den Kolben 1, wobei mit der durchgezogenen Linie die Kolbenaußenfläche 13 und mit der gestrichelten Linien die Ringabschnitt-Außenfläche 14 gezeigt sind. Die Ringabschnitt-Außenfläche 14 ist in der Draufsicht nicht sichtbar und auch aus diesem Grund gestrichelt angedeutet.

Wie insbesondere Figur 2 zu entnehmen ist, weist die Kolbenaußenfläche 13 in Umfangsrichtung 5 einen elliptischen Verlauf auf. In den gezeigten Ausführungsbeispielen weist die Kolbenaußenfläche 13 in Umfangsrichtung 5 einen ovalen Verlauf auf und weist somit einen Außendurchmesser 15 mit zwei Extrema auf, welche relativ zueinander in Umfangsrichtung 5, in den gezeigten Ausführungsbeispielen um 90°, verdreht sind (siehe Figur 2). Die Kolbenaußenfläche 13 weist also einen kleinen Außendurchmesser 15a und einen großen Außendurchmesser 15b auf, die in Umfangsrichtung 5 relativ zueinander um 90° verdreht sind. In den gezeigten Ausführungsbeispielen erstreckt sich der kleine Außendurchmesser 15a entlang der Bolzenbohrungen 8 und der große Außendurchmesser 15b dementsprechend radial quer zu den Bolzenbohrungen 8. Wie insbesondere Figur 2 ferner zu entnehmen ist, weist die Ringabschnitt-Außenfläche 14 demgegenüber einen in Umfangsrichtung 5 rotationssymmetrischen Verlauf auf, ist also rund. In den gezeigten Ausführungsbeispielen und bevorzugt ist der gesamte Ringabschnitt 11 in Umfangsrichtung 5 rotationssymmetrisch. Figur 2 ist dabei extrem dargestellt, um die entsprechenden Verläufe der Außenflächen 13, 14 besser sichtbar zu machen.

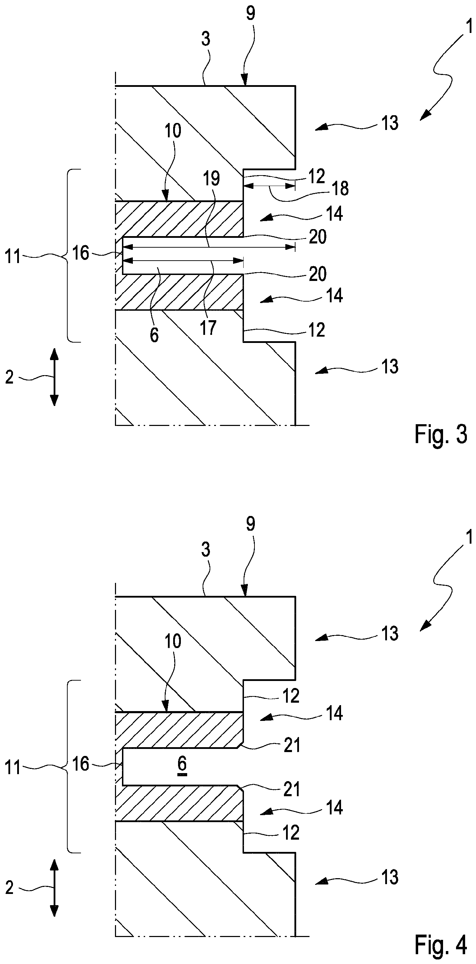

Die Figuren 3 und 4 zeigen jeweils einen Schnitt durch den Kolben 1 im Bereich des Ringabschnitts 11.

Wie insbesondere den Figuren 3 und 4 zu entnehmen ist, wird die Ringabschnitt-Außenfläche 14 axial mittig vom Ringträger 10 gebildet. Wie den Figuren 3 und 4 ferner entnommen werden kann, weist die Ringnut 6 radial innen einen axial verlaufenden Grund 16 auf. Eine radiale Erstreckung 17 der Ringnut 6 vom Grund 16 bis zur Ringabschnitt-Außenfläche 14 (siehe Figur 3), nachfolgend auch als Aufnahmetiefe 17 bezeichnet, ist in den gezeigten Ausführungsbeispielen in Umfangsrichtung 5 konstant. Ein radialer Abstand 18 der Ringabschnitt-Außenfläche 14 zur Kolbenaußenfläche 13 (siehe Figuren 2 und 3), nachfolgend auch als Versatz 18 bezeichnet, variiert demgegenüber in Umfangsrichtung 5. Dabei erreicht der Versatz 18 bei dem großen Außendurchmesser 15b ein maximalen und beim kleinen Außendurchmesser 15a einen minimalen Wert, wobei der Wert stets größer als Null ist. Dementsprechend variiert auch eine radiale Erstreckung 19 vom Grund 16 der Ringnut 6 bis zur Kolbenaußenfläche 13 (siehe Figur 3), welche nachfolgend auch als Ringnuttiefe 19 bezeichnet wird, in Umfangsrichtung 5.

Das in Figur 4 gezeigte Ausführungsbeispiel unterscheidet sich von dem in den Figuren 1 bis 3 gezeigten Ausführungsbeispiel dadurch, dass an den radial äußeren und axial gegenüberliegenden Kanten 20 der Ringnut 6 jeweils eine Fase 21 eingebracht ist.

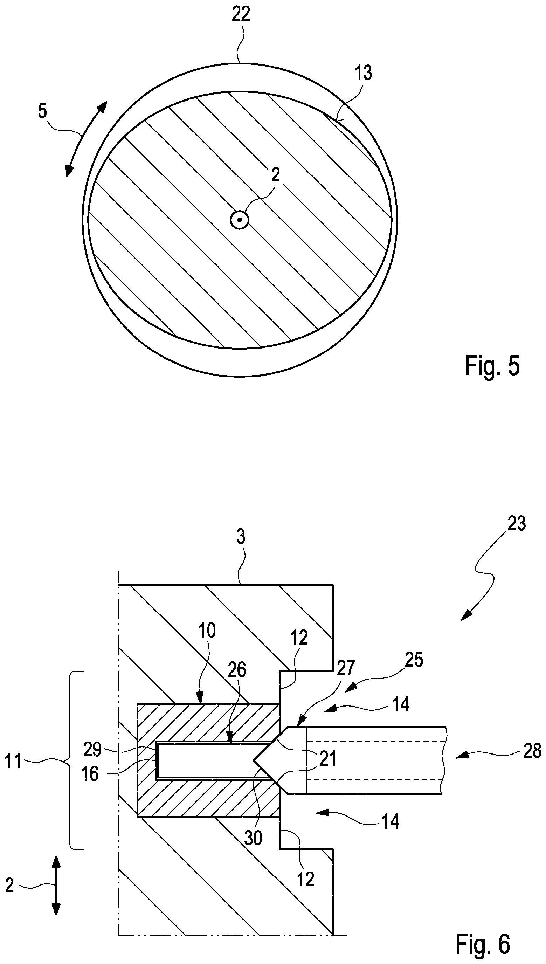

Die Herstellung des Kolbens 1 erfolgt entsprechend den Figuren 5 und 6 durch das Bereitstellen eines Rohlings 22, der in Figur 5 in einer Draufsicht zu sehen ist. Der Rohling 22 wird im gezeigten Beispiel durch Gießen des Leichtmetalls in eine nicht gezeigte Gussform hergestellt. Beim Gießvorgang wird dabei der Ringträger 10 in der Gussform derart angeordnet, dass der Ringträger 10 beim späteren Kolben 1 im Ringabschnitt 11 angeordnet ist. Der Ringträger 10 wird in der Gussform mit dem Leichtmetall umgossen, um den Rohling 22 herzustellen. Wie Figur 5 zu entnehmen ist, weist der Rohling 22 im gezeigten Beispiel eine im Wesentlichen zylindrische Form auf.

Der Rohling 22 wird zunächst zu einer in Figur 6 gezeigten Vorform 23 bearbeitet. Die Bearbeitung erfolgt hierbei drehend. Dabei wird mit einem nicht gezeigten Werkzeug durch eine rotationsymmetrische, drehende Bearbeitung eine Vertiefung 25 im Bereich des den Ringträger 10 aufweisenden Ringabschnitts 11 radial in den Rohling 22 eingebracht. Die Vertiefung 25 ist dementsprechend in Umfangsrichtung 5 rotationssymmetrisch. Der Ringträger 10 ist dabei axial mittig in der Vertiefung 25 angeordnet. Figur 6 zeigt hierbei die Vorform 23 und somit die bereits eingebrachte Vertiefung 25.

Wie in Figur 6 beispielhaft dargestellt, wird anschließend in die Vertiefung 25 die Ringnut 6 eingebracht. Dies erfolgt im gezeigten Beispiel durch das Stechen der Ringnut 6 in den in der Vertiefung 25 mittig angeordneten Ringträger 10, sodass die Ringnut 6 axial mittig im Ringträger 10 ausgebildet ist. Das Einbringen der Ringnut 6 erfolgt wiederum durch eine rotationssymmetrische Drehung der Vorform 23 relativ zu einem Werkzeug 26 zum Einbringen der Ringnut 6, welches nachfolgend auch als Nutmesser 26 bezeichnet wird. Figur 6 zeigt hierbei einen Zustand, in welchem das Nutmesser 26 radial soweit in den Ringträger 10 gestochen ist, dass die Ringnut 6 im gezeigten Schnitt bereits die Aufnahmetiefe 17 aufweist.

Beim in Figur 6 gezeigten Ausführungsbeispiel werden ferner die Kanten 20 der Ringnut 6 jeweils mit einer Fase 21 versehen. Dies erfolgt wiederum durch eine rotationssymmetrische Drehung der Vorform 23 relativ zu einem Werkzeug 27 zum Einbringen der Fasen 21, wobei das Werkzeug 27 nachfolgend auch als an Anfasmesser 27 bezeichnet wird. Wie Figur 6 zu entnehmen ist, ist das Anfasmesser 27 dabei mit einer im gezeigten Schnitt im wesentlichen Dreieck förmigen Spitze versehen, sodass beide Kanten 20 gleichzeitig mit jeweils einer Fase 21 versehen werden.

Im in Figur 6 gezeigten Ausführungsbeispiel erfolgt das Stechen der Ringnut 6 und das Einbringen der Fasen 21 mit einem Kombinationswerkzeug 28 in der Art eines Formwerkzeugs, welches das Nutmesser 26 und das Anfasmesser 27 umfasst. Alternativ kann dieser Prozess auch mit einem Formmesser (nicht gezeigt), das die Anfasung bereits beinhaltet, realisiert werden. Das Nutmesser 26 und das Anfasmesser 27 sind im Kombinationswerkzeug 28 miteinander verbunden, derart, dass sie gemeinsam bewegbar sind. Das Kombinationswerkzeug 28 wird zum Stechen der Ringnut 6 und zum Einbringen der Fasen 21 radial außen der Vorform 23 angeordnet. Hierbei sind eine Vorderseite 29 des Nutmessers 26 sowie eine die Spitze des Anfallsmessers 27 umfassende Vorderseite 30 des Anfasmessers 27 der Vertiefung 25 zugewandt. Zudem sind das Nutmesser 26 und das Anfasmesser 27 nebeneinander angeordnet, derart, dass das Anfasmesser 27 dem Nutmesser 26 in Umfangsrichtung 5 und/oder tangential zum Ringabschnitt 11 folgt. Es erfolgt dann eine rotationssymmetrische, relative Drehbewegung zwischen dem Kombinationswerkzeug 28 und der Vorform 23. Insbesondere wird die Vorform 23 rotationssymmetrisch gedreht. Dabei erfolgt eine radiale Bewegung des Kombinationswerkzeugs 28 in Richtung der Vertiefung 25, derart, dass zunächst das Nutmesser 26 die Ringnut 6 in den Ringträger 10 sticht und derart, dass beim Stechen oder im Anschluss daran das Anfasmesser 27 die Fasen 21 einbringt.

Gemäß Figur 6 kann eine Bearbeitung des Rohlings 22 derart erfolgen, dass die Vorform 23 bereits den Kolbenboden 3 aufweist.

Anschließend wird die Vorform 23 zum Kolben 1 bearbeitet. Die Bearbeitung erfolgt hierbei drehend und derart, dass in der Vorform 23 außerhalb des Ringabschnitts 11 die Kolbenaußenfläche 13eingebracht wird (siehe Figuren 5 und 6), welche in Umfangsrichtung 5 elliptisch verläuft.. Zur drehenden Bearbeitung der Vorform 23 zum Kolben 1 erfolgt hierbei eine entsprechend elliptische drehende Bewegung der Vorform 23 relativ zu einem nicht gezeigten Werkzeug.

Im Gegensatz zur Herstellung der Kolbenaußenfläche 13 erfolgt also das Einbringen der Vertiefung 25 sowie der Ringnut 6 samt Fasen 21 durch eine rotationssymmetrisch drehende Bearbeitung. Die Herstellung des Ringabschnitts 11 erfolgt also im Gegensatz zur Herstellung der in Umfangsrichtung 5 elliptischen Kolbenaußenfläche 13 mit einer rotationssymmetrisch drehenden Bewegung relativ zu entsprechenden Werkzeugen, insbesondere dem Kombinationswerkzeug 28. Somit ist die Herstellung des Kolben 1 erheblich vereinfacht.

Der Kolben 1, insbesondere das Verfahren zur Herstellung des Kolbens 1, haben insbesondere zur Folge, dass sich während der gesamten Herstellung des Kolbens 1 an den Kanten 20 keine Auswürfe und/oder Grate bilden. Somit werden auch nachfolgende Bearbeitungen zur Entfernung solcher Auswürfe und/oder Grate überflüssig, sodass die Herstellung des Kolbens 1 weiter vereinfacht ist. Zudem werden auf diese Weise durch derartige Auswürfe und/oder Grate verursachte Verschleiße und Beschädigungen verhindert.

## Patentansprüche

1. Kolben (1) für eine Brennkraftmaschine,
- mit einem in einer Axialrichtung (2) stirnseitigen Kolbenboden (3),
- mit einem Kolbenkörper (9), der eine radial äußerste Kolbenaußenfläche (13) des Kolbens (1) aufweist, die sich ausgehend vom Kolbenboden (3) axial und in einer Umfangsrichtung (5) erstreckt,
- mit einem axial zum Kolbenboden (3) beabstandeten und sich axial und in Umgangsrichtung (5) erstreckenden Ringabschnitt (11), der einen Ringträger (10) mit einer Ringnut (6) zur Aufnahme eines Kolbenrings aufweist,
- wobei der Ringabschnitt (11) eine radial äußere und in Umfangsrichtung (5) verlaufende Ringabschnitt-Außenfläche (14) aufweist,
- wobei die Ringabschnitt-Außenfläche (14) relativ zur Kolbenaußenfläche (13) radial nach innen versetzt ist,
- wobei die Kolbenaußenfläche (13) in Umfangsrichtung (5) elliptisch verläuft,
**dadurch gekennzeichnet,**
**dass** die Ringabschnitt-Außenfläche (14) in Umfangsrichtung (5) rotationssymmetrisch verläuft.

2. Kolben nach Anspruch 1,
**dadurch gekennzeichnet,**
- **dass** der Kolbenkörper (9) aus einem Leichtmetall hergestellt ist,
- **dass** der Ringträger (10) im Ringabschnitt (11) im Kolbenkörper (9) aufgenommen und aus einem Werkstoff herstellt ist, der eine größere Härte aufweist, als das der Kolbenkörper (9),
- **dass** der Ringträger (10) zur Kolbenaußenfläche (13) axial beidseitig beabstandet ist,
- **dass** der Ringträger (10) radial zur Kolbenaußenfläche (13) nach innen versetzt angeordnet ist.

3. Kolben nach Anspruch 2,
**dadurch gekennzeichnet,**
**dass** der Ringträger (10) die Ringabschnitt-Außenfläche (14) teilweise bildet.

4. Kolben nach einem der Ansprüche 1 bis 3,
**dadurch gekennzeichnet,**
- **dass** die Ringnut einen radial inneren Grund (16) aufweist,
- **dass** eine radial vom Grund (16) bis zur Ringabschnitt-Außenfläche (14) verlaufende Aufnahmetiefe (17) der Ringnut (6) in Umfangsrichtung (5) konstant ist.

5. Kolben nach einem der Ansprüche 1 bis 4,
**dadurch gekennzeichnet,**
- **dass** die Ringnut (6) einen radial inneren Grund (16) aufweist,
- **dass** eine Ringnuttiefe (19) der Ringnut (6), welche radial vom Grund (16) bis zur Kolbenaußenfläche (13) verläuft in Umfangsrichtung (5) variiert.

6. Kolben nach einem der Ansprüche 1 bis 5,
**dadurch gekennzeichnet,**
- **dass** die Ringnut (6) radial außen von zwei axial gegenüberliegenden Kanten (20) begrenzt ist,
- **dass** zumindest eine der Kanten (20) eine Fase (21) aufweist.

7. Verfahren zum Herstellen eines Kolbens (1) nach einem der Ansprüche 1 bis 6, mit den Verfahrensmaßnahmen:
- Bereitstellen eines Rohlings (22),
- rotationssymmetrisches Einbringen einer radialen Vertiefung (25) in den Rohling (22) und somit Herstellen einer Vorform (23),
- rotationssymmetrisches Einbringen der Ringnut (6) in die Vertiefung (25), so dass im Ringabschnitt (11) die Ringabschnitt-Außenfläche (14) ausgebildet ist.
- elliptisches Bearbeiten der Vorform (23), so dass die elliptische Kolbenaußenfläche (13) ausgebildet ist.

8. Verfahren nach Anspruch 7,
**dadurch gekennzeichnet,**
**dass** an zumindest einer radial äußeren Kante (20) der Ringnut (6) eine Fase (21) eingebracht wird.

9. Verfahren nach Anspruch 7 und 8,
**dadurch gekennzeichnet,**
- **dass** zum Einbringen der Ringnut (6) und der zumindest einen Fase (21) ein Kombinationswerkzeug (28) bereitgestellt wird, welches ein Nutmesser (26) und ein dem Nutmesser (26) folgendes und mit dem Nutmesser (26) verbundenes Anfasmesser (27) aufweist, wobei das Nutmesser (26) eine radiale Nutmesser-Vorderseite (29) aufweist, welche eine radiale Anfas-Vorderseite (30) des Anfasmessers (27) überragt,
- **dass** das Kombinationswerkzeug (28) radial außen der Vorform (23) angeordnet wird, sodass beide Vorderseiten (29, 30) der Vertiefung (25) zugewandt sind,
- **dass** zwischen der Vorform (23) und dem Kombinationswerkzeug (28) eine rotationssymmetrische relative Drehbewegung durchgeführt wird,
- **dass** während der Drehbewegung das Kombinationswerkzeug (28) relativ zur Vorform (23) radial hin zur Vorform (23) bewegt wird, sodass bei der Drehbewegung zunächst das Nutmesser (26) und anschließend das Anfasmesser (27) in die Vertiefung (25) eindringen, und sodass das Nutmesser (26) die Ringnut (6) in die Vertiefung (25) einbringt und das Anfasmesser (27) die zumindest eine Fase (21) einbringt.

10. Verfahren nach einem der Ansprüche 7 bis 9,
**dadurch gekennzeichnet,**
- **dass** der Rohling (22) durch ein Gießverfahren hergestellt wird,
- **dass** der Ringträger (10) in eine Gussform eingelegt wird, derart, dass der Ringträger (10) beim späteren Kolben (1) im Ringabschnitt (11) angeordnet ist.

## Claims

1. Piston (1) for a combustion engine,
- having an end-face piston crown (3) in an axial direction (2),
- having a piston body (9) which has a radially outermost piston outer surface (13) of the piston (1), which extends starting from the piston crown (3) axially and in a circumferential direction (5),
- having a ring portion (11), spaced axially from the piston crown (3) and extending axially and in circumferential direction (5), which has a ring carrier (10) having a ring groove (6) for receiving a piston ring,
- wherein the ring portion (11) has a radially outer ring portion outer surface (14) which extends in circumferential direction (5),
- wherein the ring portion outer surface (14) is offset radially to the inside relative to the piston outer surface (13),
- wherein the piston outer surface (13) extends elliptically in circumferential direction (5),
**characterized in**
**that** the ring portion outer surface (14) extends in a rotationally symmetrical manner in circumferential direction (5).

2. Piston according to claim 1,
**characterized in**
- **that** the piston body (9) is produced from a light metal,
- **that** the ring carrier (10) in the ring portion (11) is accommodated in the piston body (9) and is produced from a material which has a greater hardness than that of the piston body (9),
- **that** the ring carrier (10) is spaced on both sides axially from the piston outer surface (13),
- **that** the ring carrier (10) is arranged offset to the inside radially of the piston outer surface (13).

3. Piston according to claim 2,
**characterized in**
**that** the ring carrier (10) partially forms the ring portion outer surface (14).

4. Piston according to any of claims 1 to 3,
**characterized in**
- **that** the ring groove has a radially inner base (16),
- **that** a receiving depth (17), extending radially from the base (16) as far as the ring portion outer surface (14), of the ring groove (6) is constant in circumferential direction (5).

5. Piston according to any of claims 1 to 4,
**characterized in**
- **that** the ring groove has a radially inner base (16),
- **that** a ring groove depth (19) of the ring groove (6), which extends radially from the base (16) as far as the piston outer surface (13), varies in circumferential direction (5).

6. Piston according to any of claims 1 to 5,
**characterized in**
- **that** the ring groove (6) is delimited radially on the outside by two edges (20) which are axially opposite one another,
- **that** at least one of the edges (20) has a chamfer (21).

7. Method for producing a piston (1) according to any of claims 1 to 6 a having the method measures:
- providing a blank (22),
- rotationally symmetrical introduction of a radial indentation (25) into the blank (22) and thus production of a pre-form (23),
- rotationally symmetrical introduction of the ring groove (6) into the indentation (25), such that in the ring portion (11) the ring portion outer surface (14) is formed.
- elliptical processing of the preform (23), such that the elliptical piston outer surface (13) is formed.

8. Method according to claim 7,
**characterized in**
**that** a chamfer (21) is introduced at at least one radially outer edge (20) of the ring groove (6).

9. Method according to claims 7 and 8,
**characterized in**
- **that** for introducing the ring groove (6) and the at least one chamfer (21) a combination tool (28) is provided which has a groove blade (26) and a chamfering blade (27) following the groove blade (26) and connected to the groove blade (26), wherein the groove blade (26) has a radial groove blade front side (29), which protrudes beyond a radial chamfer front side (30) of the chamfering blade (27),
- **that** the combination tool (28) is arranged radially externally to the preform (23) such that both front sides (29, 30) are facing the indentation (25),
- **that** between the preform (23) and the combination tool (28), a rotationally symmetrical relative rotational movement is carried out,
- **that** during the rotational movement the combination tool (28) is moved relative to the preform (23) radially towards the preform (23), such that in the rotational movement first the groove blade (26) and subsequently the chamfering blade (27) penetrates into the indentation (25), and such that the groove blade (26) introduces the ring groove (6) into the indentation (25) and the chamfering blade (27) introduces the at least one chamfer (21).

10. Method according to any of claims 7 to 9,
**characterized in**
- **that** the blank (22) is produced by a casting method,
- **that** the ring carrier (10) is laid in a casting mould such that the ring carrier (10) in the future piston (1) is arranged in the ring portion (11).

## Revendications

1. Piston (1) pour un moteur à combustion interne,
- avec un fond de piston (3) côté avant dans une direction axiale (2),
- avec un corps de piston (9) qui présente une surface extérieure de piston (13) radialement la plus extérieure du piston (1) qui s'étend axialement à partir du fond de piston (3) et dans une direction périphérique (5),
- avec une section annulaire (11) espacée axialement par rapport au fond de piston (3) et s'étendant axialement et dans une direction périphérique (5), section qui présente un support annulaire (10) avec une rainure annulaire (6) pour la réception d'un anneau de piston,
- selon lequel la section annulaire (11) présente une surface extérieure de section annulaire (14) radialement extérieure et s'étendant dans une direction périphérique (5),
- selon lequel la surface extérieure de section annulaire (14) est en déport radialement vers l'intérieur par rapport à la surface extérieure de piston (13),
- selon lequel la surface extérieure de piston (13) s'étend de manière elliptique dans une direction périphérique (5),
**caractérisé en ce que**
la surface extérieure de section annulaire (14) s'étend selon une symétrie de rotation dans la direction périphérique (5).

2. Piston selon la revendication 1,
**caractérisé en ce que**
- le corps de piston (9) est fabriqué en un métal léger,
- le support annulaire (10) est reçu dans la section annulaire (11) dans le corps de piston (9) et est fabriqué en un matériau qui présente une dureté supérieure à celle du corps de piston (9),
- le support annulaire (10) est espacé axialement des deux côtés par rapport à la surface extérieure de piston (13),
- le support annulaire (10) est agencé en déport radialement vers l'intérieur par rapport à la surface extérieure de piston (13).

3. Piston selon la revendication 2,
**caractérisé en ce que**
le support annulaire (10) forme partiellement la surface extérieure de section annulaire (14).

4. Piston selon l'une quelconque des revendications 1 à 3,
**caractérisé en ce que**
- la rainure annulaire présente une base radialement intérieure (16),
- une profondeur de réception (17) s'étendant radialement depuis la base (16) jusqu'à la surface extérieure de section annulaire (14) de la rainure annulaire (6) est constante dans une direction périphérique (5).

5. Piston selon l'une quelconque des revendications 1 à 4,
**caractérisé en ce que**
- la rainure annulaire (6) présente une base radialement intérieure (16),
- une profondeur de rainure annulaire (19) de la rainure annulaire (6) qui s'étend radialement depuis la base (16) jusqu'à la surface extérieure de piston (13), varie en direction périphérique (5).

6. Piston selon l'une quelconque des revendications 1 à 5,
**caractérisé en ce que**
- la rainure annulaire (6) est délimitée radialement à l'extérieur par deux arêtes (20) opposées axialement,
- au moins une des arêtes (20) présente un chanfrein (21).

7. Procédé de fabrication d'un piston (1) selon l'une quelconque des revendications 1 à 6, avec les mesures de procédé suivantes :
- la fourniture d'une ébauche (22),
- la réalisation selon une symétrie de rotation d'une cavité (25) radiale dans l'ébauche (22) et ainsi la fabrication d'une préforme (23),
- la réalisation selon une symétrie de rotation de la rainure annulaire (6) dans la cavité (25) de sorte que la surface extérieure de section annulaire (14) soit réalisée dans la section annulaire (11).
- l'usinage elliptique de la préforme (23) de sorte que la surface extérieure de piston (13) elliptique soit réalisée.

8. Procédé selon la revendication 7,
**caractérisé en ce que**
un chanfrein (21) est réalisé au niveau d'au moins une arête (20) radialement extérieure de la rainure annulaire (6).

9. Procédé selon les revendications 7 et 8,
**caractérisé en ce que**
- pour l'introduction de la rainure annulaire (6) et de l'au moins un chanfrein (21), un outil combiné (28) est fourni, lequel présente une lame à rainurer (26) et une lame à chanfreiner (27) suivant la lame à rainurer (26) et reliée à la lame à rainurer (26), selon lequel la lame à rainurer (26) présente un côté avant de lame à rainurer (29) radial qui surplombe un côté avant à chanfreiner (30) radial de la lame à chanfreiner (27),
- l'outil combiné (28) est agencé radialement à l'extérieur de la préforme (23) de sorte que les deux côtés avant (29, 30) soient tournés vers la cavité (25),
- un mouvement de rotation relatif selon une symétrie de rotation est réalisé entre la préforme (23) et l'outil combiné (28),
- pendant le mouvement de rotation, l'outil combiné (28) est déplacé par rapport à la préforme (23) radialement vers la préforme (23) de sorte que lors du mouvement de rotation, tout d'abord la lame à rainurer (26) et ensuite la lame à chanfreiner (27) pénètrent dans la cavité (25), et de sorte que la lame à rainurer (26) introduise la rainure annulaire (6) dans la cavité (25) et la lame à chanfreiner (27) introduise le au moins un chanfrein (21).

10. Procédé selon l'une quelconque des revendications 7 à 9,
**caractérisé en ce que**
- l'ébauche (22) est fabriquée par un procédé de coulée,
- le support annulaire (10) est inséré dans un moule de coulée de telle manière que le support annulaire (10) pour le piston ultérieur (1) soit agencé dans la section annulaire (11).
